# EUROPEAN PATENT SPECIFICATION

(11) **EP 3 257 714 B1**
(45) Date of publication and mention of the grant of the patent: **25.11.2020**
(21) Application number: 16174346.3
(22) Date of filing: 14.06.2016
(51) Int. Cl.: B60W 10/30, B60W 10/26, B60W 50/00, B60W 30/18, B60W 40/076

(54) **A VEHICLE ENERGY MANAGEMENT SYSTEM AND METHOD FOR A VEHICLE**
FAHRZEUGENERGIEVERWALTUNGSSYSTEM UND VERFAHREN FÜR EIN FAHRZEUG
SYSTÈME DE GESTION D'ÉNERGIE DE VÉHICULE ET PROCÉDÉ POUR UN VÉHICULE

(43) Date of publication of application: 20.12.2017
(73) Proprietor: Volvo Car Corporation, 40 531 Göteborg (SE)
(72) Inventor: Bäckelie, Magnus, 42244 Hisings Backa (SE); Jundén, Linus, 41871 Göteborg (SE)
(74) Representative: Kransell & Wennborg KB

(56) References cited:
- EP-A1- 2 529 972
- WO-A1-2009/120740
- WO-A1-2013/167149
- WO-A1-2015/124983

## Description

### TECHNICAL FIELD

The invention relates to a vehicle energy management system and method for a vehicle. The vehicle energy management system includes a vehicle energy coordination unit arranged to predict a future route and speed profile within a defined time frame based on historic or current road and traffic data - or a combination thereof - stored in a memory device or received from external road and traffic information sources. The present invention also relates to a corresponding computer readable medium storing a program for implementing the vehicle energy management system and method.

### BACKGROUND

The demand for increased fuel efficiency in modern vehicles with internal combustion engines has long been a driving factor for continuous improvement work within the automotive sector. Energy management balancing electrical loads and climate control in the vehicle has a substantial effect on real life fuel efficiency. Energy management is also of the utmost importance in hybrid electric vehicles and electric vehicles to maximize range and optimize auxiliary functions. In recent years there has been a rapid development within the field of traffic information made available to a vehicle, enabling accurate prediction of routes and engine loads along the predicted route. The sources of information ranges from internal sensor systems to external information sources such as Global Positioning System (GPS) data, compass data, geographical data, infrastructure-to-vehicle-data, vehicle-to-vehicle data. External road-and-traffic data can now be compiled into a virtual so called *Electronic Horizon* (*EH*) which enables a vehicle to literally see what is around the corner and therefore opens up a whole new world of accurate predictions of vehicle load situations that can be used for further improvement in overall vehicle fuel efficiency. An example of such a traffic information system is described in US 2014/0129121 A1, in which traffic information can be analysed to determine durations of stops at stop signs and/or stop lights. The durations of stops can be associated with a time of day and/or day of the week. In some implementations, navigational routes can be determined based stop sign and/or stop light information, including the delays attributable to detected stop signs and/or stop lights.

Several predictive vehicle energy management systems and methods are known to the market today. Some examples from the last few years are described in the following patent documents: US 2013/0274952 A1, WO 2015/094077 A1, US 2011/0202216 A1 and US 2007/0272173 A1. Even though these systems certainly will increase fuel efficiency and improves thermal management in vehicles, they do not provide a prediction of temporarily available surplus kinetic energy that will predictably be lost in friction energy losses during friction braking, which is the focus of the present invention. WO 2013/167149 A1 discloses also a vehicle energy management system for a vehicle and a method of managing such energy according the preamble of respectively claims 1 and 5.

### SUMMARY OF THE INVENTION

The object of the invention is to provide a vehicle energy management system and method for a vehicle with an engine, which identifies and makes use of "free energy", i.e. temporarily available surplus kinetic energy that will predictably be lost in friction energy losses during friction braking. The vehicle energy management system includes a vehicle energy coordination unit arranged to predict a future route and speed profile within a defined time frame based on historic or current road and traffic data - or a combination thereof - stored in a memory device or received from external road and traffic information sources. The invention is especially characterized in that the vehicle energy coordination unit is arranged to:
- estimate the probability for future friction braking following an engine braking event along said future route and speed profile, indicating temporarily available surplus kinetic energy that will predictably be lost in friction energy losses during friction braking, and to
- use at least one of a battery unit and a climate system as an energy buffer and use converted buffered surplus kinetic energy when no available surplus energy is predicted.

According to the invention, where the engine is a an internal combustion engine provided with a stop/start system for shutting off the engine at driving cycle long stop events defined as time periods with engine off, the vehicle energy management system characterized in that the vehicle energy coordination unit is further arranged to:
- estimate the probability for a long stop event along the predicted future route and speed profile;
- register a predicted long stop event if the probability for a long stop event exceeds a predetermined threshold value in a location along the predicted future route and speed profile, and to
- use the surplus kinetic energy to operate a compressor in a climate system for a predetermined time period before a registered predicted long stop event, in order to lower the temperature in an evaporator in said climate system to prime said climate system for prolonged operation during the predicted long stop event.

By using the surplus kinetic energy in this way, it is possible to prolong the time period during which the engine may be maintained in its off condition whilst the climate system still maintains sufficient cooling to maintain a comfortable temperature in the vehicle. This is a major advantage of the invention.

Preferably, the vehicle energy coordination unit uses braking history data and electronic horizon data including route data and current traffic sensor data for the estimation of the probability for future engine braking events followed by friction braking along said future route and speed profile. Alternatively, speed history data may be used instead of - or as a compliment to - braking history data.

In an advantageous embodiment, the vehicle energy coordination unit is arranged to estimate future vehicle speed by extrapolating momentary road inclination data when electronic horizon data is unavailable.

The invention also includes a method of managing vehicle energy for a vehicle with an engine, including a vehicle energy coordination unit adapted for predicting a future route and speed profile within a defined time frame based on historic or current road and traffic data - or a combination thereof - stored in a memory device or received from external road and traffic information sources. The method is especially characterized in the steps of:
- estimating the probability for future friction braking following an engine braking event along said future route and speed profile, indicating temporarily available surplus kinetic energy that will predictably be lost in friction energy losses during friction braking;
- using at least one of a battery unit and a climate system as an energy buffer and use converted buffered surplus kinetic energy when no available surplus energy is predicted.

According to the method of the invention, where the engine is an internal combustion engine provided with a stop/start system for shutting off the engine at driving cycle long stop events defined as time periods with engine off, the method is especially characterized in the further steps of:
- estimating the probability for a long stop occasion with zero speed and engine off in locations along the predicted future route and speed profile;
- registering a predicted long stop event if the probability for a long stop event exceeds a predetermined threshold value in a location along the predicted future route and speed profile, and
- using the surplus kinetic energy to operate a compressor in a climate system for a predetermined time period before a registered predicted long stop event, in order to lower the temperature in an evaporator in said climate system to prime said climate system for prolonged operation during the predicted long stop event.

The invention also covers a computer readable medium storing a program for implementing the vehicle energy management system and method as described above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
- Fig. 1: shows a simplified schematic view of a vehicle provided with a vehicle energy management system according to the present invention.
- Fig. 2: shows a simplified illustration of a predicted route for a vehicle provided with a vehicle energy management system according to the present invention,
- Fig. 3: finally shows a simplified diagrammatical view of the vehicle energy management system according to the present invention.

### DETAILED DESCRIPTION OF EXAMPLE EMBODIMENTS OF THE INVENTION

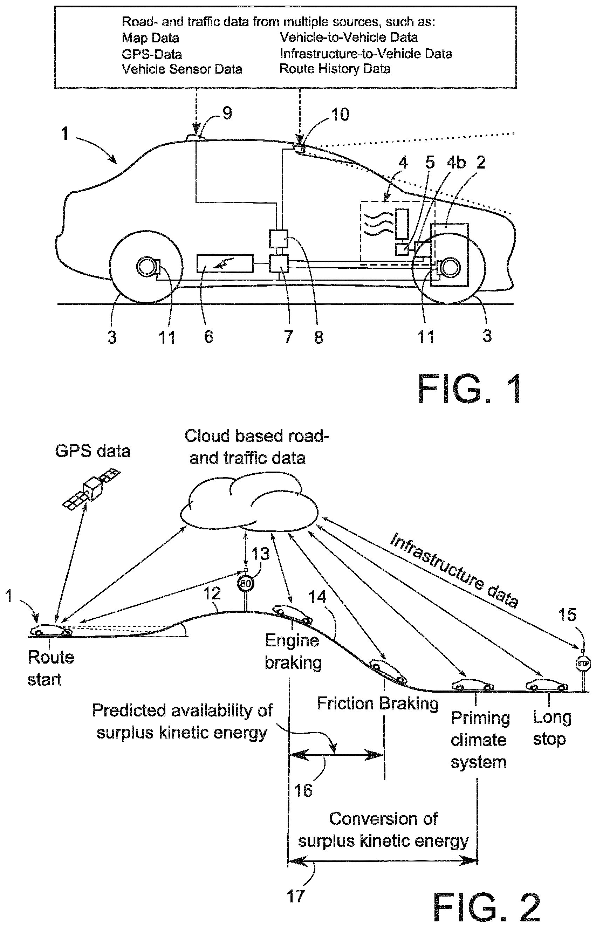

The invention will now be described with reference to embodiments of the invention and with reference to the appended drawings. With initial reference to Fig. 1, this figure shows a schematic view of a vehicle 1 provided with a vehicle energy management system according to the present invention. The vehicle 1 in the shown example is provided with an internal combustion engine 2 which propels the vehicle 1 via the wheels 3. It should be noted that the invention in its widest meaning is equally applicable to a vehicle with an electric motor as an engine 1 or that the vehicle is driven by a hybrid-electric powertrain (not shown) which includes both an internal combustion engine and an electric motor. The vehicle 1 is further provided with a climate system 4 for heating or cooling ambient air within the vehicle 1. The climate system 4 is provided with a compressor 4b and an evaporator 5. The vehicle 1 is also provided with an energy storage system including a battery unit 6 for storing electric energy. A vehicle energy coordination unit 7 is arranged to predict a future route and speed profile within a defined time frame based on historic or current road and traffic data - or a combination thereof - stored in a memory device 8 or received from external road and traffic information sources. In the shown example, the vehicle 1 is provided with an antenna unit 9 as well as a vehicle sensor unit 10 which is adapted to receive said road and traffic data. The antenna unit 9 is connected to both the vehicle energy coordination unit 7 and the memory device 8.

According to the invention the vehicle energy coordination unit 7 is arranged to:
- estimate the probability for future friction braking following an engine braking event along said future route and speed profile, indicating temporarily available surplus kinetic energy that will predictably be lost in friction energy losses during friction braking, and to
- use at least one of a battery unit 6 and a climate system 4 as an energy buffer and use converted buffered surplus kinetic energy when no available surplus energy is predicted.

The temporarily available surplus kinetic energy can be regarded as "free", i.e. not constituting an energy cost if it will predictively be lost in friction energy losses during friction braking within a predicted time frame anyway along the future route and speed profile. Hence the term "temporarily available surplus kinetic energy may also be referred to as "free" energy to use for auxiliary vehicle systems. The climate system 4 is only one of many examples of such vehicle systems. Other examples are in-car entertainment systems (not shown) or auxiliary lighting systems (not shown).

Conversion of the surplus kinetic energy into electric energy by regenerative charging of a battery unit 6 may be obtained through use of an alternator (not shown) or via energy regeneration units 11 operatively connected to the wheels 3 and/or the brakes (not shown) of the vehicle 1. The energy regeneration units 11 are also operatively connected to the vehicle energy coordination unit 7 and the battery unit 6 as shown schematically in Fig.1

In Fig. 2, a simplified illustration of a predicted route for a vehicle 1 is shown. At route start, the vehicle 1 receives external road and traffic information from multiple external as well as internal data sources. As an example, the vehicle may favourably receive traffic infrastructure data such as speed limits, road-inclination data, map and other navigational GPS data. Via vehicle-to-vehicle communication data and current data feed from infrastructure sources, information is gathered about current traffic situations, traffic congestions etcetera. In the shown example there is a small hill 12 ahead of the vehicle 1. On top of the hill 12 is a speed limit sign 13 followed by a slope 14. After the slope 14 there is a stop sign 15 were a long stop event is predicted. This information is used by the vehicle energy coordination unit 7 to estimate the probability for future engine braking events followed by friction braking along the future route and speed profile as described initially. In Fig. 2, this is illustrated by the vehicle 1 driving down the slope 14. Here, the vehicle 1 has started engine braking down the slope 14 and in order to be able to come to a stop before the stop sign 15, the vehicle energy coordination unit 7 predicts that the vehicle will have to use friction braking at a point further down the slope 14. Hence, as indicated by the arrow 16, the energy coordination unit 7 has predicted the availability of surplus kinetic energy from the point of engine braking start until the predicted start of friction braking further down the slope 14. This indicates temporarily available surplus kinetic energy that will predictably be lost in friction energy losses during the upcoming predicted friction braking, and hence the vehicle energy coordination unit 7 will initiate conversion of said surplus kinetic energy into electric energy by regenerative charging of a battery unit 6 during the predicted engine braking event followed by friction braking and also during the friction braking, as indicated by the arrow 17 in Fig. 2.

In the example shown in Fig. 2, the vehicle 1 is equipped with an internal combustion engine 2 (As shown in Fig. 1) which is provided with a stop/start system for shutting off the engine 4 at driving cycle long stop events defined as time periods with engine off. The term driving cycle long stop event here means a temporary long stop event which occurs during a driving cycle of the vehicle, i.e. not a parking event where the vehicle is parked with the engine shut off for longer periods between two driving cycles. The vehicle energy coordination unit 7 is further arranged to estimate the probability for a long stop event along the predicted future route and speed profile. Furthermore, according to the invention, the vehicle energy coordination unit 7 is adapted to register a predicted long stop event if the probability for a long stop event exceeds a predetermined threshold value in a location along the predicted future route and speed profile; and to use the surplus kinetic energy to operate the compressor 4b in the climate system 4 for a predetermined time period before a registered predicted long stop event, in order to lower the temperature in the evaporator 5 in said climate system 4 to prime said climate system 4 for prolonged operation during the predicted long stop event. The compressor 4b is preferably of a modern clutchless variable displacement type driven directly by the internal combustion engine 2, allowing the vehicle energy coordination unit 7 to send a pulse width modulated control signal to increase the displacement of the compressor 4b and hence lower the temperature in the evaporator 5 in preparation for the predicted long stop event. Alternatively, a traditional AC-compressor with an electromechanical clutch (not shown) may be used, in which case the vehicle energy coordination unit 7 correspondingly sends a control signal to engage the clutch and hence operate the compressor 4b.

In Fig. 2, such a long stop event is registered at the stop sign 15 and the vehicle energy coordination unit 7 has - as described above - also predicted a future engine braking event followed by friction braking in the slope 14 located just before the stop sign 15. Again, as indicated by the arrow 16, the energy coordination unit 7 has predicted the availability of surplus kinetic energy from the point of engine braking start until the predicted start of friction braking further down the slope 14. Hence the vehicle energy coordination unit 7 initiates conversion of available surplus kinetic energy into electric energy during both engine braking and subsequent friction braking down the slope 14 as indicated by the arrow 17.

With further reference to Fig. 2, the vehicle energy coordination unit 7 may favourably be arranged to operate a climate system 4 for a predetermined time period before a registered predicted long stop event in order to charge an evaporator 5 (As shown in Fig. 1) in the climate system 4. As an example only, this predetermined time period may be between 30 seconds to several minutes and is illustrated in Fig. 2 in the vehicle 1 which is placed second from the right in the figure and has the text "Priming climate system" under it.

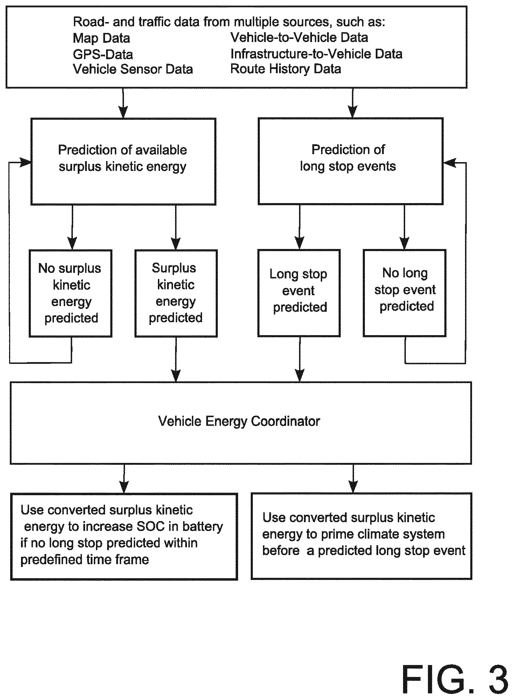

Fig. 3 shows a simplified diagrammatical view of the vehicle energy management system according to the present invention, in line with the operational description of the system above with reference to Fig. 2.

In a favourable embodiment of the invention the vehicle energy coordination unit 7 uses recorded braking history data and electronic horizon data including route data and current traffic sensor data for the estimation of the probability for future engine braking events followed by friction braking along said future route and speed profile. Braking history data is recorded in the memory device 8 which is arranged to store position, time, day and direction for events where friction braking occurs. Alternatively, speed history data may be recorded instead of - or as a compliment to - braking history. Preferably, the vehicle energy coordination unit 7 is arranged to estimate future vehicle speed by extrapolating momentary road inclination data when electronic horizon data is unavailable.

The invention further provides a method of managing vehicle energy for a vehicle 1, corresponding to the vehicle energy management system described above. The below description of the method may appear repetitive, but put in method steps, it involves the steps of:
- estimating the probability for future friction braking following an engine braking event along said future route and speed profile, indicating temporarily available surplus kinetic energy that will predictably be lost in friction energy losses during friction braking;
- using at least one of a battery unit 6 and a climate system 4 as an energy buffer and use converted buffered surplus kinetic energy when no available surplus energy is predicted.

In an embodiment of the invention, wherein the internal combustion engine 2 is provided with a stop/start system for shutting off the engine at driving cycle long stop events defined as time periods with engine off, the method involves the further steps of:
- estimating the probability for a long stop occasion with engine off in locations along the predicted future route and speed profile;
- registering a predicted long stop event if the probability for a long stop event exceeds a predetermined threshold value in a location along the predicted future route and speed profile, and
- using the surplus kinetic energy to operate a compressor 4b in a climate system 4 for a predetermined time period before a registered predicted long stop event, in order to lower the temperature in an evaporator 5 in said climate system 4 to prime said climate system for prolonged operation during the predicted long stop event. By using the surplus kinetic energy in this way, it is possible to prolong the time period during which the engine may be maintained in its off condition whilst the climate system still maintains sufficient cooling to maintain a comfortable temperature in the vehicle 1. This is a major advantage of the invention.

The invention also provides a computer readable medium storing a program for implementing the vehicle energy management system and method as described above.

It is to be understood that the present invention is not limited to the embodiments described above and illustrated in the drawings and a skilled person will recognize that many changes and modifications may be made within the scope of the appended claims.

### LIST OF REFERENCE NUMERALS USED IN THE DRAWINGS:

- 1.: Vehicle
- 2.: Internal combustion engine
- 3.: Wheels
- 4.: Climate System
- 4b.: Compressor
- 5.: Evaporator
- 6.: Battery unit
- 7.: Vehicle energy coordination unit
- 8.: Memory device
- 9.: Antenna unit
- 10.: Vehicle sensor unit
- 11.: Energy regeneration units
- 12.: Hill
- 13.: Speed limit sign
- 14.: Slope
- 15.: Stop sign
- 16.: Arrow indicating availability of predicted surplus kinetic energy
- 17.: Arrow indicating conversion of surplus kinetic energy

## Claims

1. Vehicle energy management system for a vehicle (1) with an internal combustion engine (2), including a vehicle energy coordination unit (7) arranged to predict a future route and speed profile within a defined time frame based on historic or current road and traffic data - or a combination thereof - stored in a memory device (8) or received from external road and traffic information sources, said vehicle energy coordination unit (7) being arranged to estimate the probability for future friction braking following an engine braking event along said future route and speed profile, indicating temporarily available surplus kinetic energy that will predictably be lost in friction energy losses during friction braking, said engine (2) being provided with a stop/start system for shutting off the engine (2) at driving cycle long stop events defined as time periods with engine off, **characterized in that** the vehicle energy coordination unit (7) is further arranged to:
- estimate the probability for a long stop event along the predicted future route and speed profile;
- register a predicted long stop event if the probability for a long stop event exceeds a predetermined threshold value in a location along the predicted future route and speed profile, and to
- use the surplus kinetic energy to operate a compressor (4b) in a climate system (4) for a predetermined time period before a registered predicted long stop event, in order to lower the temperature in an evaporator (5) in said climate system (4) to prime said climate system (4) for prolonged operation during the predicted long stop event.

2. Vehicle energy management system according to claim 1, **characterized in that** the vehicle energy coordination unit (7) uses braking history data and electronic horizon data including route data and current traffic sensor data for the estimation of the probability for future engine braking events followed by friction braking along said future route and speed profile.

3. Vehicle energy management system according claims 1 or 2, **characterized in that** the vehicle energy coordination unit (7) uses speed history data and electronic horizon data including route data and current traffic sensor data for the estimation of the probability for future engine braking events followed by friction braking along said future route and speed profile.

4. Vehicle energy management system according to claim 2 or 3, **characterized in that** the vehicle energy coordination unit (7) is arranged to estimate future vehicle speed by extrapolating momentary road inclination data when electronic horizon data is unavailable.

5. Method of managing vehicle energy for a vehicle (1) with an internal combustion engine (2), including a vehicle energy coordination unit (7) adapted for predicting a future route and speed profile within a defined time frame based on historic or current road and traffic data - or a combination thereof - stored in a memory device (8) or received from external road and traffic information sources, said vehicle energy coordination unit (7) performing the step of estimating the probability for future friction braking following an engine braking event along said future route and speed profile, indicating temporarily available surplus kinetic energy that will predictably be lost in friction energy losses during friction braking, said engine (2) being provided with a stop/start system for shutting off the engine (2) at driving cycle long stop events defined as time periods with engine off, **characterized in** the further steps of:
- estimating the probability for a long stop occasion with engine off in locations along the predicted future route and speed profile;
- registering a predicted long stop event if the probability for a long stop event exceeds a predetermined threshold value in a location along the predicted future route and speed profile, and
- using the surplus kinetic energy to operate a compressor (4b) in a climate system (4) for a predetermined time period before a registered predicted long stop event, in order to lower the temperature in an evaporator (5) in said climate system (4) to prime said climate system for prolonged operation during the predicted long stop event.

6. A computer readable medium storing a program for implementing the vehicle energy management system and method according to claims 1-5.

## Patentansprüche

1. Fahrzeugenergieverwaltungssystem für ein Fahrzeug (1) mit einem Verbrennungsmotor (2), das eine Fahrzeugenergiekoordinationseinheit (7) beinhaltet, die dazu eingerichtet ist, auf der Basis historischer oder aktueller Straßen- und Verkehrsdaten - oder einer Kombination daraus -, die in einer Speichervorrichtung (8) gespeichert sind oder von externen Straßen- und Verkehrsinformationsdiensten empfangen werden, ein zukünftiges Routen- und Geschwindigkeitsprofil innerhalb eines definierten Zeitrahmens vorherzusagen, wobei die Fahrzeugenergiekoordinationseinheit (7) dazu eingerichtet ist, die Wahrscheinlichkeit einer zukünftigen Reibungsbremsung nach einem Motorbremsereignis entlang des zukünftigen Routen- und Geschwindigkeitsprofils zu schätzen, wobei zeitweise verfügbare überschüssige kinetische Energie angegeben wird, die vorhersagbar während der Reibungsbremsung in Reibungsenergieverlusten verloren gehen wird, wobei der Motor (2) mit einem Stopp/Start-System zum Abschalten des Motors (2) bei Fahrzyklus-Langstoppereignissen versehen ist, die als Zeitspannen mit ausgeschaltetem Motor definiert sind, **dadurch gekennzeichnet, dass** die Fahrzeugenergiekoordinationseinheit (7) ferner zu Folgendem eingerichtet ist:
- Schätzen der Wahrscheinlichkeit eines Langstoppereignisses entlang des vorhergesagten zukünftigen Routen- und Geschwindigkeitsprofils,
- Registrieren eines vorhergesagten Langstoppereignisses, wenn die Wahrscheinlichkeit für ein Langstoppereignis an einer Stelle entlang des zukünftigen Routen- und Geschwindigkeitsprofils einen festgelegten Schwellenwert überschreitet, und
- Verwenden der überschüssigen kinetischen Energie, um einen Verdichter (4b) in einer Klimaanlage (4) für eine festgelegte Zeitspanne vor einem registrierten vorhergesagten Langstoppereignis zu betreiben, um die Temperatur in einem Verdampfer (5) in dem Klimasystem (4) zu senken, um das Klimasystem (4) für einen langanhaltenden Betrieb während des vorhergesagten Langstopps vorzubereiten.

2. Fahrzeugenergieverwaltungssystem nach Anspruch 1, **dadurch gekennzeichnet, dass** die Fahrzeugenergiekoordinationseinheit (7) Bremsverlaufsdaten und elektronische Horizontdaten einschließlich Routendaten und aktueller Verkehrssensordaten zur Schätzung der Wahrscheinlichkeit zukünftiger Motorbremsereignisse, gefolgt von Reibungsbremsung, entlang des zukünftigen Routen- und Geschwindigkeitsprofils verwendet.

3. Fahrzeugenergieverwaltungssystem nach Anspruch 1 oder 2, **dadurch gekennzeichnet, dass** die Fahrzeugenergiekoordinationseinheit (7) Geschwindigkeitsverlaufsdaten und elektronische Horizontdaten einschließlich Routendaten und aktueller Verkehrssensordaten zur Schätzung der Wahrscheinlichkeit zukünftiger Motorbremsereignisse, gefolgt von Reibungsbremsung, entlang des zukünftigen Routen- und Geschwindigkeitsprofils verwendet.

4. Fahrzeugenergieverwaltungssystem nach Anspruch 2 oder 3, **dadurch gekennzeichnet, dass** die Fahrzeugenergiekoordinationseinheit (7) dazu eingerichtet ist, zukünftige Fahrzeuggeschwindigkeit durch Extrapolieren momentaner Straßenneigungsdaten zu schätzen, wenn elektronische Horizontdaten nicht verfügbar sind.

5. Verfahren zum Verwalten von Fahrzeugenergie für ein Fahrzeug (1) mit einem Verbrennungsmotor (2), das eine Fahrzeugenergiekoordinationseinheit (7) beinhaltet, die dazu eingerichtet ist, auf der Basis historischer oder aktueller Straßen- und Verkehrsdaten - oder einer Kombination daraus -, die in einer Speichervorrichtung (8) gespeichert sind oder von externen Straßen- und Verkehrsinformationsdiensten empfangen werden, ein zukünftiges Routen- und Geschwindigkeitsprofil innerhalb eines definierten Zeitrahmens vorherzusagen, wobei die Fahrzeugenergiekoordinationseinheit (7) den Schritt des Schätzens der Wahrscheinlichkeit einer zukünftigen Reibungsbremsung nach einem Motorbremsereignis entlang des zukünftigen Routen- und Geschwindigkeitsprofils ausführt, wobei zeitweise verfügbare überschüssige kinetische Energie angegeben wird, die vorhersagbar während der Reibungsbremsung in Reibungsenergieverlusten verloren gehen wird, wobei der Motor (2) mit einem Stopp/Start-System zum Abschalten des Motors (2) bei Fahrzyklus-Langstoppereignissen versehen ist, die als Zeitspannen mit ausgeschaltetem Motor definiert sind, **gekennzeichnet durch** die folgenden weiteren Schritte:
- Schätzen der Wahrscheinlichkeit eines Langstoppereignisses mit ausgeschaltetem Motor an Stellen entlang des vorhergesagten zukünftigen Routen-und Geschwindigkeitsprofils,
- Registrieren eines vorhergesagten Langstoppereignisses, wenn die Wahrscheinlichkeit für ein Langstoppereignis an einer Stelle entlang des zukünftigen Routen- und Geschwindigkeitsprofils einen festgelegten Schwellenwert überschreitet, und
- Verwenden der überschüssigen kinetischen Energie, um einen Verdichter (4b) in einer Klimaanlage (4) für eine festgelegte Zeitspanne vor einem registrierten vorhergesagten Langstoppereignis zu betreiben, um die Temperatur in einem Verdampfer (5) in dem Klimasystem (4) zu senken, um das Klimasystem für einen langanhaltenden Betrieb während des vorhergesagten Langstopps vorzubereiten.

6. Computerlesbares Medium, das ein Programm zum Umsetzen des Fahrzeugenergieverwaltungssystems und - verfahrens nach Anspruch 1 bis 5 speichert.

## Revendications

1. Système de gestion d'énergie de véhicule pour un véhicule (1) équipé d'un moteur à combustion interne (2), comprenant une unité de coordination d'énergie de véhicule (7) conçue pour prévoir un profil de trajet et de vitesse futur dans un délai défini sur la base de données de trajet et de circulation historiques ou actuelles - ou d'une combinaison de celles-ci - stockées dans un dispositif de mémoire (8) ou reçues de sources externes d'informations sur le trajet et la circulation, ladite unité de coordination d'énergie de véhicule (7) étant conçue pour estimer la probabilité d'un futur freinage par friction suite à un événement de freinage moteur le long dudit profil de trajet et de vitesse futur, indiquant l'énergie cinétique excédentaire temporairement disponible qui sera perdue de manière prévue en pertes d'énergie de friction pendant le freinage par friction, ledit moteur (2) étant pourvu d'un système d'arrêt/de démarrage pour arrêter le moteur (2) lors d'événements d'arrêt prolongé du cycle de conduite définis comme des périodes de temps avec le moteur arrêté, **caractérisé en ce que** l'unité de coordination d'énergie de véhicule (7) est en outre conçue pour :
estimer la probabilité d'un événement d'arrêt prolongé le long du profil de trajet et de vitesse futur prévu ;
enregistrer un événement d'arrêt prolongé prévu si la probabilité d'un événement d'arrêt prolongé dépasse une valeur seuil prédéfinie en un lieu situé le long du profil de trajet et de vitesse futur, et
utiliser l'énergie cinétique excédentaire pour faire fonctionner un compresseur (4b) dans un système de climatisation (4) pendant une période de temps prédéfinie avant un événement d'arrêt prolongé prévu enregistré, afin d'abaisser la température dans un évaporateur (5) dans ledit système de climatisation (4) pour amorcer ledit système de climatisation (4) pour un fonctionnement prolongé pendant l'événement d'arrêt prolongé prévu.

2. Système de gestion d'énergie de véhicule selon la revendication 1, **caractérisé en ce que** l'unité de coordination d'énergie de véhicule (7) utilise des données d'historique de freinage et des données d'horizon électronique comprenant des données de trajet et des données de capteur de circulation actuelle pour l'estimation de la probabilité d'événements de freinage moteur futurs suivis par un freinage par friction le long dudit profil de trajet et de vitesse futur.

3. Système de gestion d'énergie de véhicule selon la revendication 1 ou 2, **caractérisé en ce que** l'unité de coordination d'énergie de véhicule (7) utilise des données d'historique de vitesse et des données d'horizon électronique comprenant des données de trajet et des données de capteur de circulation actuelle pour l'estimation de la probabilité d'événements de freinage moteur futurs suivis par un freinage par friction le long dudit profil de trajet et de vitesse futur.

4. Système de gestion d'énergie de véhicule selon la revendication 2 ou 3, **caractérisé en ce que** l'unité de coordination d'énergie de véhicule (7) est conçue pour estimer la vitesse de véhicule future en extrapolant les données d'inclinaison de route momentanée lorsque les données d'horizon électronique ne sont pas disponibles.

5. Procédé de gestion d'énergie de véhicule pour un véhicule (1) équipé d'un moteur à combustion interne (2), comprenant une unité de coordination d'énergie de véhicule (7) conçue pour prévoir un profil de trajet et de vitesse futur dans un délai défini sur la base de données de trajet et de circulation historiques ou actuelles - ou d'une combinaison de celles-ci - stockées dans un dispositif de mémoire (8) ou reçues de sources externes d'informations sur le trajet et la circulation, ladite unité de coordination d'énergie de véhicule (7) effectuant l'étape consistant à estimer la probabilité d'un futur freinage par friction suite à un événement de freinage moteur le long dudit profil de trajet et de vitesse futur, indiquant l'énergie cinétique excédentaire temporairement disponible qui sera perdue de manière prévue en pertes d'énergie de friction pendant le freinage par friction, ledit moteur (2) étant pourvu d'un système d'arrêt/de démarrage pour arrêter le moteur (2) lors d'événements d'arrêt prolongé du cycle de conduite définis comme des périodes de temps avec le moteur arrêté, **caractérisé en ce que** les autres étapes consistent à :
estimer la probabilité d'une occasion d'arrêt prolongé avec arrêt du moteur dans des endroits le long du profil de trajet et de vitesse futur ;
enregistrer un événement d'arrêt prolongé prévu si la probabilité d'un événement d'arrêt prolongé dépasse une valeur seuil prédéfinie en un lieu situé le long du profil de trajet et de vitesse futur, et
utiliser l'énergie cinétique excédentaire pour faire fonctionner un compresseur (4b) dans un système de climatisation (4) pendant une période de temps prédéfinie avant un événement d'arrêt prolongé prévu enregistré, afin d'abaisser la température dans un évaporateur (5) dans ledit système de climatisation (4) pour amorcer ledit système de climatisation pour un fonctionnement prolongé pendant l'événement d'arrêt prolongé prévu.

6. Support lisible par ordinateur stockant un programme pour mettre en œuvre le système de gestion d'énergie de véhicule et procédé selon les revendications 1 à 5.
